# EUROPEAN PATENT SPECIFICATION

(11) **EP 3 498 443 B1**
(45) Date of publication and mention of the grant of the patent: **18.08.2021**
(21) Application number: 18397533.3
(22) Date of filing: 14.12.2018
(51) Int. Cl.: B27B 31/00

(54) **LOG WOOD TRANSFER AND DISPENSER APPARATUS**
STAMMHOLZTRANSPORT- UND AUSGABEVORRICHTUNG
APPAREIL DE TRANSFERT ET DE DISTRIBUTION DE BOIS DE RONDINS

(30) Priority: 18.12.2017 FI 20176130
(43) Date of publication of application: 19.06.2019
(73) Proprietor: Regon AY, 85800 Haapajärvi (FI)
(72) Inventor: AUTIO, Juha, 85800 Haapajärvi (FI)
(74) Representative: Laine IP Oy

(56) References cited:
- CA-A1- 2 089 780
- FI-B- 78 882
- JP-A- H05 124 725
- US-A- 4 173 277

## Description

### FIELD

The invention relates to transfer and dispenser equipment. In particular, the invention is related to a log wood transfer and dispenser apparatus according to claim 1.

### BACKGROUND

Document FI 78 882 B discloses a log wood transfer and dispenser, comprising a stopper; a transfer device for transferring wooden logs for an input of a wood processing device, wherein the transfer device is adapted to move back and forth in relation to the stopper by actuating means and the transfer device is movable for dispensing log woods one by one.

Various devices for transferring, organizing and sorting of log woods are used in sawmills for log wood handling. The devices are usually separate and provided for performance of a single work stage. Generally, logs are transmitted with different chain conveyors, organized with a mechanical arranger and finally dispensed one by one with the device intended for this purpose. Devices meant for log handling in sawmills are not typically applicable for mechanical handling of firewood, because their purchase price may be too high relatively to amount of usage. Moreover, while using sawmills devices for handling firewood, curviness and lower quality of firewood compared to sawn wood may be a problem.

Various table arrangements may be used in professional firewood production to ease and speed up work phases. The most common way is to use a log stand with a sloping plane by which logs are transferred by hand one by one to a firewood processor. The practice is affordable, but when handling large logs, work can be very hard and even dangerous. There is need for develop further devices suitable for log handling.

### SUMMARY OF THE INVENTION

According to the invention, an apparatus defined by the features of claim 1 is provided.

According to the present invention, there is provided a log wood transfer and dispenser apparatus, which comprise a stopper and a transfer device for transferring log woods to an input of a wood processing device, wherein the transfer device is adapted to move back and forth in relation to the stopper by actuating means such that the log woods are spreadable and organisable on the transfer device and the transfer device is movable for dispensing log woods one by one.

According to an embodiment, the transfer device is adapted to move in relation to the stopper for guiding the log woods from the stopper to the transfer device and the transfer device is movable from under the log woods for dispensing log woods one by one to the stopper.

According to an embodiment, the stopper is adapted to stop log woods while transferring the transfer device.

According to an embodiment, the apparatus further comprises a dispenser for dispensing log woods to the input of a wood processing device by moving a log wood from the transfer device along the stopper.

According to an embodiment, the transfer device is adapted to move in relation to the stopper by means of the support point and the joint for organizing the log woods side by side on the transfer device and for moving the log woods.

According to an embodiment, the dispenser is adapted to move as a whole with the transfer device for transferring a single log wood dropped to stopper at a time for the input of the wood processing device.

### BRIEF DESCRIPTION OF THE DRAWINGS

Some embodiments of the invention will be described in more detail with reference to the accompanying figures, wherein:
Figure 1-5 illustrates a log wood transfer and dispenser apparatuses viewed from the side in accordance with some embodiments,
Figure 6 illustrates a log wood transfer and dispenser apparatus in accordance with some embodiments viewed from the front,
Figure 7 illustrates a log wood transfer and dispenser apparatus according to some embodiments, attached with a dispenser, and
Figure 8 illustrates a log wood transfer and dispenser apparatus according to some embodiments, with a movable stopper.

### EMBODIMENTS

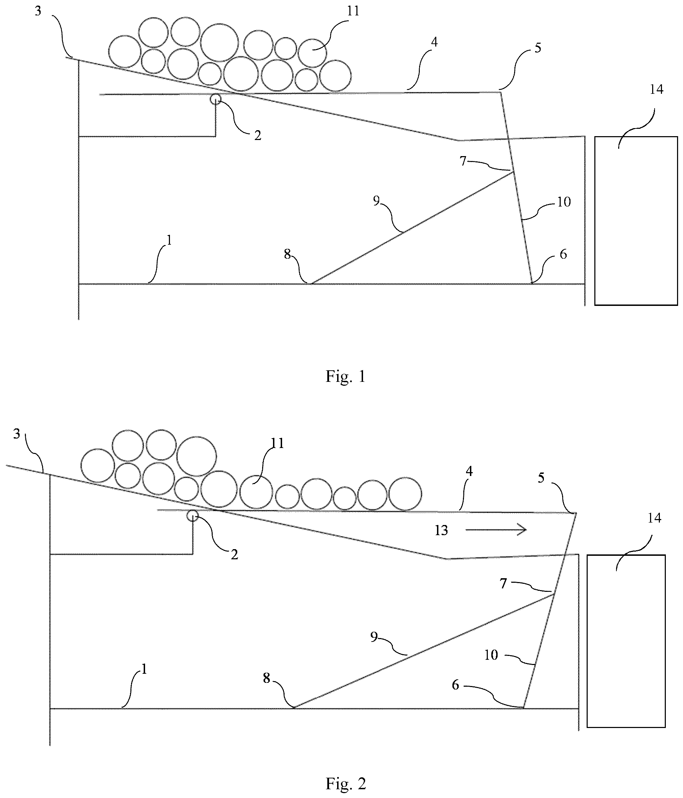

Figure 1 illustrates a log wood transfer and dispenser apparatus in accordance with some embodiments viewed from the side. The apparatus comprises a base 1, a support point 2, a stopper 3, a transfer device 4, joints 5-8, means 9 and a dispenser 10. Log woods 11 are loaded on the stopper 3 and partly on the transfer device 4. The logs 11 may be logs meant for firewood or other wood or sawn wood.

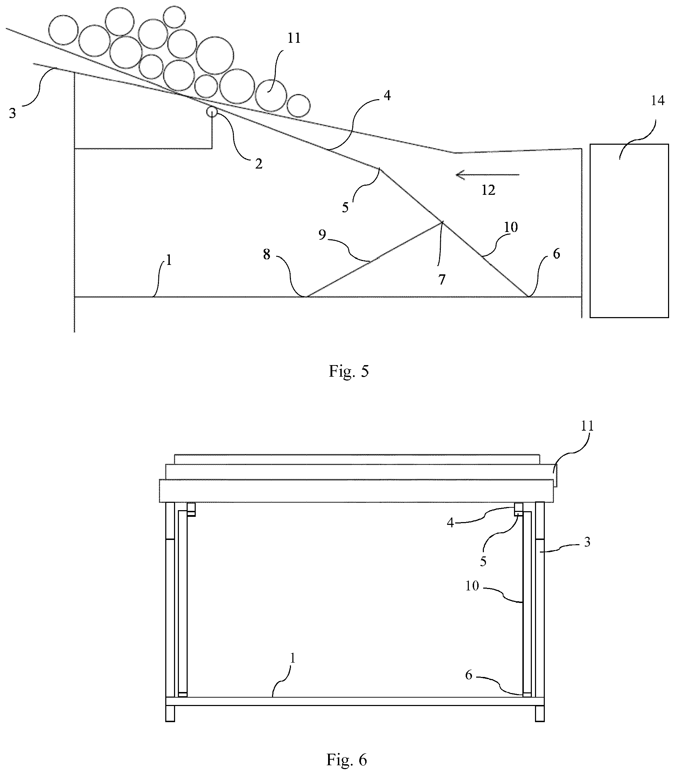

According to an embodiment, logs are loaded at least partly on the stopper 3 and/or the transfer device 4. The stopper 3 may be fixedly installed and it may form the base of the apparatus and operate as a loading table for incoming logs 11. Referring also to Figure 6, the stopper 3 may be produced of two or more elements illustrated in the figure, the distance of which to each other is adjusted according to length of log 11. The distance of the elements may be adjusted already at the production stage of the apparatus or it may be adjustable by the user, for example, by telescopic parts which connect elements together.

The stopper 3 acts as a stopper of logs 11 when the transfer device 4 is moved. In embodiments illustrated in Figures 1-5, the stopper 3 comprises a first part, which is adapted inclined in relation to the transfer device 4 so that at least some of the logs 11 loaded on the apparatus are drifted on the transfer device 4. The stopper 3 comprises a second part which is adapted to stop a log coming from the transfer device 4. It should be noted, that instead of a single integrated stopper 3, several separate parts may be used to form these differently operative portions.

According to an embodiment, the apparatus comprises joints 5-8 as illustrated in Figures 1-6. The parts of the apparatus are connected together by the joints and they allow the parts of the apparatus to move in relation to each other.

According to an embodiment, the transfer device 4 may be connected to the base 1 by a support point 2 and by the joint 5 to the dispenser 10, as illustrated in Figures 1-5. Referring also to Figure 6, the transfer device 4 may be produced of two or more elements illustrated by the figure, the distance of which to each other is adjusted according to the distance of the elements of the stopper 3 and length of log 11. The distance of the elements may be adjusted already at the production stage of the apparatus or it may be adjustable by the user for example by telescopic parts, which connect elements together. By means of the move of the transfer device 4 in relation to the stopper 3 log 11 can be arranged side by side for controlled dispensing. The angle of the transfer device 4 in relation to the stopper 3 is adjustable by the support point 2. The support point 1 may be a rotating roller, for example.

According to an embodiment, the apparatus may comprise a dispenser 10. The dispenser 10 may be connected by the joint 6 to the base 1, as illustrated in Figures 1-5. Logs 11 may be transmitted in a controlled way by the dispenser 10 to a wood processing device 14, such as a conveyor or a firewood processor. When the dispenser 10 is connected to the apparatus, several devices and work phases can be combined to the single device. This makes transfer and dispensing of logs 11 easier, there is no need for own operating devices for every device and function and the apparatus can be used by one controlling apparatus and power unit.

The wood transfer and dispenser apparatus may comprise at least one means 9 for moving the transfer device 4 and/or dispenser 10. The accompanying drawings illustrate some embodiments, wherein the dispenser 10 and the transfer device 4 are moved by the actuating means 9. The actuating means 9 may be connected to the base 1 by a joint 8 and to the dispenser 10 by a join 7, as illustrated in Figures 1-5. The actuating means 9 may be for example a cylinder, which may be a hydraulic cylinder.

According to an embodiment, the apparatus can be used by a single controlling apparatus. The controlling apparatus comprises a user interface via which user control commands can be received to control the apparatus manually. The apparatus may be adapted to carry out at least part of the work steps automatically. The controlling apparatus may comprise a control unit comprising one or more processors which perform computer program code stored in memory which, when executed in the processor, provides control commands to the operating devices, such as for controlling the means 9 and/or the drive unit control. The control functionality can be programmable and/or at least partially implemented as a hardware solution.

According to an embodiment the apparatus can be used by a single power unit which is adapted to supply the required power for performing work steps, for example, to the actuating means 9. The power unit may be for example a hydraulic motor or pump.

Figure 2 illustrates a situation wherein the transfer device 4 is moved by the actuating means 9 and the dispenser 10 to the direction of the arrow 13, whereby the transfer device 4 rises above the stopper 3, the woodpile can be spread out and the logs 11 are organized one after the other on the transfer device 4. If required, the transfer device 4 is driven back and forth for as long as the logs 11 are spread out and organized on the transfer device 4. This may be the first work stage when a load of log has been fed to the dispenser and feeding apparatus (for example, from the starting point of Figure 1).

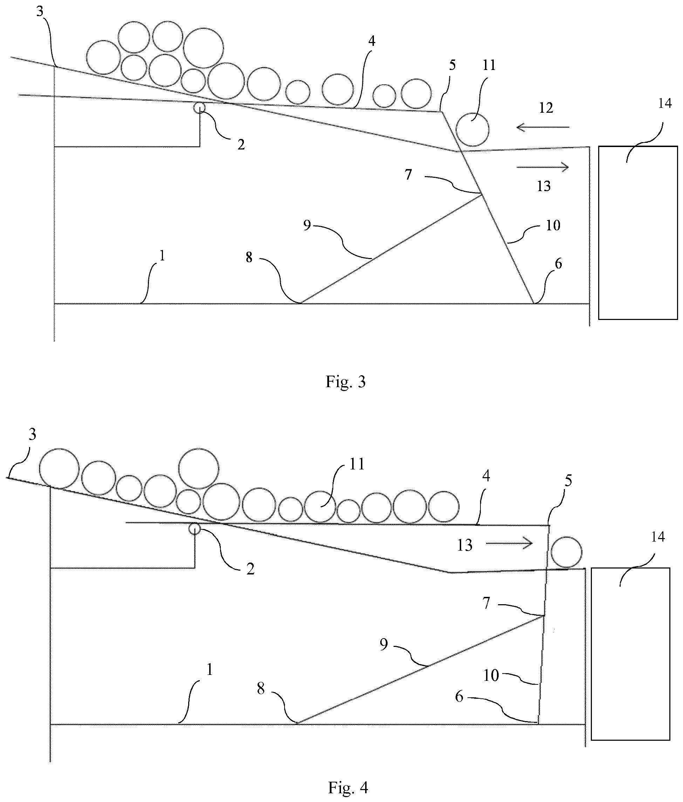

Figure 3 illustrates a situation in which the dispenser 10 is moved to the direction of the arrow 12, whereby the logs 11 collide to the stopper 3, which stops the movement of the log 11 also to the direction of the arrow 12. At the same time, the transfer device 4 moves from under a log 11, whereby one log 11 at a time can be dispensed in a controlled way on the stopper 3in front of the dispenser 10. The organized log woods are thus waiting on the transfer device 4 during the movement of the transfer device 4 for the dispensing from the transfer device 4. This may the second work stage after the spreading the pile.

Figure 4 illustrates a situation in which the dispenser 10 is moved to the direction of the arrow 13. One or more logs 11 can thus be transferred in a controlled way along the stopper 3 by transferring the dispenser 10 to the direction of the arrow 13 so that a log 11 falls one by one for the input of the wood processing device 14. The wood processing device 14 may be, for example, a conveyor or a firewood processing device. This may be the third work stage in the functionality of the apparatus. When the log 11 is dispensed, the apparatus may return to the second stage illustrated in Figure 3, whereby a subsequent log 11 is dropped to the stopper 3 and transferred to the wood processing device 14 by the dispenser 10.

Figure 5 illustrates a situation in which the dispenser 10 is moved to the direction of the arrow 12, whereby the transfer device 4 forms by the support point 2 essentially steeper angle in relation to the stopper 3 and the transfer device 4 supports the free movement of the logs 11 on the stopper 3. The logs 11 may thus be released in case of they get stuck on the forepart of the stopper 3. The function illustrated in Figure 5 can be utilized whenever necessary, for example, in addition to or instead of the step of Figure 1.

Figure 6 shows the log wood transfer and dispenser apparatus illustrated directly from the front at the end of a wood processing device in accordance with Figures 1-5. The stopper 3 comprises two elements. The logs 11 are on the transfer device 4.

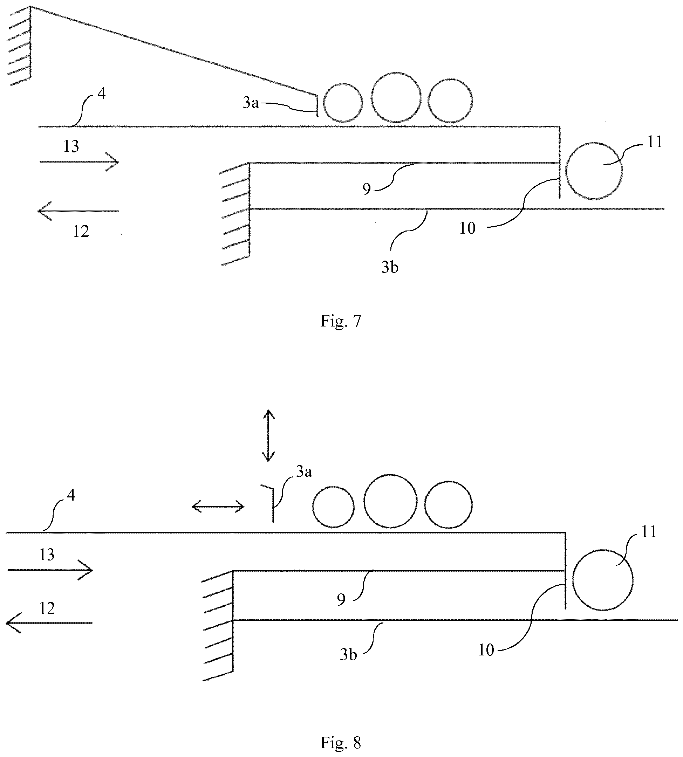

Referring to Figure 7, according to another embodiment the logs 11 can be loaded over the transfer device 4, and the dispenser 10 can be adapted to the transfer device 4 such that it moves at a whole while transferring the transfer device 4. Thus, the dispenser 10 can be attached to the transfer device 4 and the means 9 may be connected to the dispenser 10. The apparatus comprises two separate stopper parts 3a, 3b, which can be fixedly installed to the base 1. The stopper 3a can be fixedly mounted, so it does not move with the transfer device 4. The logs can be fed to the apparatus on the stopper 3a, which is adapted inclined in relation to the transfer device 4, so that at least some of the fed logs move to the transfer device 4. When the dispenser 10 is moved to the direction of the arrow 12, the logs 11 collide to the stopper 3a, which stops the movement of the logs 11 to the direction of the arrow 12. The transfer device 4 moves from under the log 11, when one or more log 11 drops on the stopper 3b in front of the dispenser 10. The dispenser 10 is then moved to the direction of the arrow 13 and one or more logs 11 can be transferred in controlled way along the stopper 3b.

Referring to Figure 8, according to an embodiment the logs 11 can be fed to the apparatus at least partly on the transfer device 4. The apparatus comprises two separate stoppers 3a, 3b. The stopper 3a can be adapted to move horizontally and/or vertically in relation to other parts of the apparatus. The stopper 3a and the transfer device 4 can move to the opposite directions when using the apparatus, whereby their movement in relation to each other further assists and speeds up organizing of logs. The stopper 3a can be adapted to conform with the movement of the logs. The stopper 3b can be fixedly installed.

It should be noted, that the embodiments illustrated above can be modified in different ways. For example, according to another embodiment the stopper 3, 3a and/or 3b of the apparatus in Figures 1-8 can be adapted to be moved (in relation to the base 1 of the apparatus and the transfer device 4). The stopper 3, 3a, 3b and the transfer device 4 can move to the opposite directions when using the apparatus, when their movement in relation to each other further assists and speeds up the organizing of the logs 11. The stopper 3, 3a can also conform with the movement of the logs 11.

According to another embodiment, the apparatus can be used without the dispenser 10. When using the apparatus without the dispenser 10, the logs can be dispensed directly downwards or with the aid of a separate conveyor.

The log wood transfer and dispenser apparatus has multiple functions connected to the same apparatus since it achieves significantly cheaper production costs and hence a cheaper purchase price compared to known solutions used in wood mills. Also the functionality with different logs is more secure and the table is easy to move due to the lightweight structure. In addition, control of the log wood transfer and dispensing apparatus is easy, when it can be used by one controlling apparatus and power unit, hence there is no need for own operating devices for every device and function.

### INDUSTRIAL APPLICABILITY

At least some embodiments are feasible in transferring and dispensing log wood.

### REFERENCE SIGNS LIST

- 1: base
- 2: support point
- 3: stopper
- 3a: stopper
- 3b: stopper
- 4: transfer device
- 5: joint
- 6: joint
- 7: joint
- 8: joint
- 9: means
- 10: dispenser
- 11: log wood
- 12: moving direction of transfer device
- 13: moving direction of transfer device
- 14: wood processing device

## Claims

1. A log wood transfer and dispenser apparatus, comprising:
- a stopper (3),
- a transfer device (4) for transferring log woods (11) for an input of a wood processing device (14), wherein the transfer device (4) is adapted to move back and forth in relation to the stopper (3, 3a) by actuating means (9) such that the log woods are spreadable and organisable on the transfer device and the transfer device (4) is movable for dispensing log woods (11) one by one.

2. The apparatus of claim 1, **characterized in that** the transfer device (4) is adapted to move in relation to the stopper (3, 3a) for guiding the log woods (11) from the stopper (3, 3a) to the transfer device (4) and the transfer device (4) is movable from under the log woods (11) for dispensing log woods (11) one by one to the stopper (3, 3b).

3. The apparatus of any preceding claim, **characterized in that** the stopper (3, 3a, 3b) comprises two or more elements, the distance of which to each other is adjustable according to the length of the log wood (11).

4. The apparatus of any preceding claim, **characterized in that** the angle between the stopper (3) and the transfer device (4) is adjustable by means of a support point (2) and at least one joint (5) by moving the transfer device (4).

5. The apparatus of any preceding claim, **characterized in that** the stopper (3, 3a, 3b) is adapted to stop log woods (11) while transferring the transfer device (4).

6. The apparatus of any preceding claim, **characterized in that** the apparatus further comprises a dispenser (10) for dispensing log woods (11) to an input of a wood processing device (14) by moving a log wood (11) from the transfer device (4) along the stopper (3, 3b).

7. The apparatus of claim 6, **characterized in that** the transfer device (4) is movable by a cylinder (9) connected to the dispenser (10) such that at least other end of the dispenser (10) moves when the transfer device (4) is moving.

8. The apparatus of claim 7, **characterized in that** the dispenser (10) is connected to the transfer device (4) via at least one joint (5).

9. The apparatus of claim 4 and 8, **characterized in that** the transfer device (4) is adapted to move in relation to the stopper (3) by means of the support point (2) and the joint (5) for organizing the log woods (11) side by side on the transfer device (4) and for moving the logs (11).

10. The apparatus of claim 6 or 7, **characterized in that** the dispenser (10) is adapted to move as a whole with the transfer device (4) for transferring a single log wood (11) dropped to stopper (3, 3b) at a time for the input of the wood processing device (14).

11. The apparatus of any preceding claim, **characterized in that** the apparatus comprises a single control device and driving power unit.

12. The apparatus of any preceding claim, **characterized in that** the apparatus is adapted to move log woods (11) to a firewood processing device (14) and/or is connectable to a firewood processing device (14).

## Patentansprüche

1. Rundholztransfer- und Ausgabeeinrichtung, die umfasst:
- eine Stoppvorrichtung (3),
- eine Transfervorrichtung (4) zum Transferieren von Rundholz (11) für einen Eingang einer Holzverarbeitungsvorrichtung (14), wobei die Transfervorrichtung (4) angepasst ist, sich in Bezug auf die Stoppvorrichtung (3, 3a) durch ein Betätigungsmittel (9) derart zurück- und vorzubewegen, dass das Rundholz auf der Transfervorrichtung ausbreitbar und organisierbar ist und die Transfervorrichtung (4) zum einzelnen Ausgeben von Rundholz (11) bewegbar ist.

2. Einrichtung nach Anspruch 1, **dadurch gekennzeichnet, dass** die Transfervorrichtung (4) angepasst ist, um sich in Bezug auf die Stoppvorrichtung (3, 3a) zum Führen des Rundholzes (11) von der Stoppvorrichtung (3, 3a) zu der Transfervorrichtung (4) zu bewegen, und die Transfervorrichtung (4) von unter dem Rundholz (11) bewegbar ist, um Rundholz (11) einzeln zu der Stoppvorrichtung (3, 3b) auszugeben.

3. Einrichtung nach einem vorstehenden Anspruch, **dadurch gekennzeichnet, dass** die Stoppvorrichtung (3, 3a, 3b) zwei oder mehr Elemente umfasst, deren Abstand zueinander gemäß der Länge des Rundholzes (11) einstellbar ist.

4. Einrichtung nach einem vorstehenden Anspruch, **dadurch gekennzeichnet, dass** der Winkel zwischen der Stoppvorrichtung (3) und der Transfervorrichtung (4) mittels eines Stützpunkts (2) und mindestens eines Gelenks (5) durch Bewegen der Transfervorrichtung (4) einstellbar ist.

5. Einrichtung nach einem vorstehenden Anspruch, **dadurch gekennzeichnet, dass** die Stoppvorrichtung (3, 3a, 3b) angepasst ist, um Rundholz (11) zu stoppen, während die Transfervorrichtung (4) transferiert wird.

6. Einrichtung nach einem vorstehenden Anspruch, **dadurch gekennzeichnet, dass** die Einrichtung weiter eine Ausgabevorrichtung (10) zum Ausgeben von Rundholz (11) zu einem Eingang einer Holzverarbeitungsvorrichtung (14) durch Bewegen eines Rundholzes (11) von der Transfervorrichtung (4) entlang der Stoppvorrichtung (3, 3b) umfasst.

7. Einrichtung nach Anspruch 6, **dadurch gekennzeichnet, dass** die Transfervorrichtung (4) durch einen Zylinder (9) bewegbar ist, der mit der Ausgabevorrichtung (10) derart verbunden ist, dass sich mindestens ein anderes Ende der Ausgabevorrichtung (10) bewegt, wenn sich die Transfervorrichtung (4) bewegt.

8. Einrichtung nach Anspruch 7, **dadurch gekennzeichnet, dass** die Ausgabevorrichtung (10) mit der Transfervorrichtung (4) über mindestens ein Gelenk (5) verbunden ist.

9. Einrichtung nach Anspruch 4 und 8, **dadurch gekennzeichnet, dass** die Transfervorrichtung (4) angepasst ist, um sich in Bezug auf die Stoppvorrichtung (3) mittels des Stützpunktes (2) und des Gelenks (5) zu bewegen, um das Rundholz (11) Seite an Seite auf der Transfervorrichtung (4) zu organisieren und die Stämme (11) zu bewegen.

10. Einrichtung nach Anspruch 6 oder 7, **dadurch gekennzeichnet, dass** die Ausgabevorrichtung (10) angepasst ist, um sich als ein Ganzes mit der Transfervorrichtung (4) zu bewegen, um ein einzelnes Rundholz (11), das auf die Stoppvorrichtung (3, 3b) gefallen ist, auf einmal für den Eingang der Holzverarbeitungsvorrichtung (14) zu transferieren.

11. Einrichtung nach einem vorstehenden Anspruch, **dadurch gekennzeichnet, dass** die Einrichtung eine einzige Steuervorrichtung und Antriebsleistungseinheit umfasst.

12. Einrichtung nach einem vorstehenden Anspruch, **dadurch gekennzeichnet, dass** die Einrichtung angepasst ist, um Rundholz (11) zu einer Brennholzverarbeitungsvorrichtung (14) zu bewegen und/oder mit einer Brennholzverarbeitungsvorrichtung (14) verbindbar ist.

## Revendications

1. Appareil de transfert et de distribution de bûches de bois, comprenant :
- une butée (3),
- un dispositif de transfert (4) pour transférer des bûches de bois (11) pour une entrée d'un dispositif de traitement de bois (14), dans lequel le dispositif de transfert (4) est adapté pour se déplacer d'avant en arrière par rapport à la butée (3, 3a) par des moyens d'actionnement (9) de sorte que les bûches de bois sont étalables et organisables sur le dispositif de transfert et le dispositif de transfert (4) est déplaçable pour distribuer des bûches de bois (11) une par une.

2. Appareil selon la revendication 1, **caractérisé en ce que** le dispositif de transfert (4) est adapté pour se déplacer par rapport à la butée (3, 3a) pour guider les bûches de bois (11) de la butée (3, 3a) au dispositif de transfert (4) et le dispositif de transfert (4) est déplaçable de sous les bûches de bois (11) pour distribuer des bûches de bois (11) une par une à la butée (3, 3b).

3. Appareil selon l'une quelconque des revendications précédentes, **caractérisé en ce que** la butée (3, 3a, 3b) comprend deux éléments ou plus, dont la distance entre eux est réglable en fonction de la longueur de la bûche de bois (11).

4. Appareil selon l'une quelconque des revendications précédentes, **caractérisé en ce que** l'angle entre la butée (3) et le dispositif de transfert (4) est réglable au moyen d'un point de support (2) et d'au moins une articulation (5) en déplaçant le dispositif de transfert (4).

5. Appareil selon l'une quelconque des revendications précédentes, **caractérisé en ce que** la butée (3, 3a, 3b) est adaptée pour arrêter les bûches de bois (11) lors du transfert du dispositif de transfert (4).

6. Appareil selon l'une quelconque des revendications précédentes, **caractérisé en ce que** l'appareil comprend en outre un distributeur (10) pour distribuer des bûches de bois (11) à une entrée d'un dispositif de traitement de bois (14) en déplaçant une bûche de bois (11) du dispositif de transfert (4) le long de la butée (3, 3b).

7. Appareil selon la revendication 6, **caractérisé en ce que** le dispositif de transfert (4) est déplaçable par un cylindre (9) connecté au distributeur (10) de sorte qu'au moins l'autre extrémité du distributeur (10) se déplace lorsque le dispositif de transfert (4) se déplace.

8. Appareil selon la revendication 7, **caractérisé en ce que** le distributeur (10) est connecté au dispositif de transfert (4) par l'intermédiaire d'au moins une articulation (5).

9. Appareil selon les revendications 4 et 8, **caractérisé en ce que** le dispositif de transfert (4) est adapté pour se déplacer par rapport à la butée (3) au moyen du point de support (2) et de l'articulation (5) pour organiser les bûches de bois (11) côte à côte sur le dispositif de transfert (4) et pour déplacer les bûches de bois (11).

10. Appareil selon la revendication 6 ou 7, **caractérisé en ce que** le distributeur (10) est adapté pour se déplacer dans son ensemble avec le dispositif de transfert (4) pour transférer une seule bûche de bois (11) tombée vers la butée (3, 3b) à la fois pour l'entrée du dispositif de traitement de bois (14).

11. Appareil selon l'une quelconque des revendications précédentes, **caractérisé en ce que** l'appareil comprend un seul dispositif de commande et une unité de puissance d'entraînement.

12. Appareil selon l'une quelconque des revendications précédentes, **caractérisé en ce que** l'appareil est adapté pour déplacer des bûches de bois (11) vers un dispositif de traitement de bois de chauffage (14) et/ou est connectable à un dispositif de traitement de bois de chauffage (14).
